# EUROPEAN PATENT SPECIFICATION

(11) **EP 0 765 603 B1**
(45) Date of publication and mention of the grant of the patent: **19.04.2000**
(21) Application number: 96202589.6
(22) Date of filing: 17.09.1996
(51) Int. Cl.: A22C 21/00

(54) **Apparatus for filleting the breastpiece of poultry**
Vorrichtung zum Filetieren von Geflügelbrust
Dispositif pour le filetage de la poitrine de volailles abattues

(30) Priority: 26.09.1995 NL 1001281
(43) Date of publication of application: 02.04.1997
(73) Proprietor: MACHINEFABRIEK MEYN B.V., 1511 AE Oostzaan (NL)
(72) Inventor: Visser, Dirk, 1511 AE Oostzaan (NL)
(74) Representative: Van Breda, Jacobus

(56) References cited:
- EP-A- 0 168 865
- EP-A- 0 207 553
- EP-A- 0 369 544
- EP-A- 0 388 331
- EP-A- 0 447 773
- EP-A- 0 551 156
- EP-A- 0 591 741
- US-A- 4 723 339
- US-A- 5 368 520
- US-A- 5 411 434

## Description

The invention relates to an apparatus for filleting the breastpiece of poultry, comprising a conveyor for conveying said breast piece and deskinning means bordering on said conveyor for removing the skin from the breastpiece, wherein said deskinning means comprise means for tearing the skin loose from the breastpiece as well as preceding cutting means positioned alongside the conveyor for making a cut in the skin at the location of the wing joints.

There are several possibilities for removing the skin from the breastpiece of poultry during the process of filleting. It is known to use therefor pairs of peeling rollers which pull the skin into the nip defined between them. Using such peeling rollers the skin at one hand can be removed thoroughly, but at the other hand the skin is damaged in such a way that thereafter it cannot be used anymore in a useful way. Another method for removing the skin from the breastpiece comprises engaging the skin at the foreward end of the breastpiece and pulling it loose in its entirety from the breastpiece in backward direction. However, it is a disadvantage of said method that at the wing joints (which are positioned near to the foreward end of the breastpiece) just below the skin tendons are present which at that location connect the skin extremely firmly with the underlying flesh. Attempts of pulling loose the skin from the breastpiece in the above mentioned manner then often result in pulling loose large pieces of flesh from the breastpiece as well. Of course the resulting loss of flesh is unwanted. Further the final breast fillet then obtains an unesthetical appearance.,

There are already apparatus known in which the skin, starting at the point of the breast, is pulled loose from the breastpiece in backward direction, and wherein previously to pulling loose the skin a cut is made in the skin in the vicinity of the wing joints. Using said cut the tendon which is present at each wing joint and which firmly connects the skin with the underlying flesh is cut through, such that the following pulling loose of the skin can be realised easily without pulling along flesh. Further it appears that like this the skin can be removed in one piece, such that it can still be used for other applications.

Further it is already known that the cut extends in a curved manner and faces with its concave side towards the breast. In practice it appears that a curved extension of the cut shaped like this offers a satisfactory result with respect to cutting said tendon.

It is noted that within the context of the present invention the term "tip of the breast" or "forward end of the breastpiece" means said side of the breastpiece where the wing joints are positioned. Thus the "rearward side of the breastpiece" is the side of the tail. Further "breast" means the forward part of the chest, in the region of the breast bone.

It is an object of the invention to further improve an apparatus for filleting the breastpiece of poultry.

Thus the apparatus according to the invention is characterised in that each cutting means comprises a hookshaped knife with a tip directed opposite to the direction of conveyance of the conveyor.

Due to the tip directed in said direction such a knife easily penetrates the skin. A cutting edge following said tip then can make the desired cut.

Thereby it is possible, that the tip of the knife is distanced further from a breastpiece to be processed than a knife portion immediately following said tip. Like this a good cutting operation is obtained while preventing a damaging of the bones, as a result of which bone fragments could enter the flesh.

With respect to the cutting means there are several possibilities. Thus it is possible that the cutting means are stationary and that the cut is obtained as a result of the relative motion between the conveyor and the cutting means. However, according to a preferred embodiment of the apparatus according to the invention the cutting means are movable relative to the conveyor. As a result of such a motion it is possible to offer to the cut the most optimal shape, such as a curved shape with the concave side facing the breast. Like this the cut is optimally adapted to the anatomy of the tendon to be cut.

Such a motion of the cutting means can be realised in many ways, for example using a cylinder-piston assembly, using followers cooperating with a curved track etc. Basically it is even conceivable that the cutting means themselves are stationary, but that the desired shape of the cuts can be obtained by giving the breastpiece an appropriate motion (in addition to the motion provided by the conveyor).

Hereinafter the invention will be elucidated further referring to the drawing, in which an embodiment of the apparatus according to the invention is illustrated.
Fig. 1 shows, schematically, part of an embodiment of the apparatus according to the invention in side elevational view;
fig. 2 shows a top plan view, belonging to fig. 1, and
fig. 3 shows an alternative embodiment of a cutting means.

The figures show part of an endless conveyor 1 which at regular distances comprises slides 2 (of which only one is visible in the figures). At the upperside the slides 2 have a shape corresponding with the shape of a breastpiece 3. Like this the breastpiece can be processed in many ways while being supported firmly. For reasons of simplicity means for tensioning and holding the breastpiece 3 onto the slide 2 are not represented.

The direction of conveyance of the conveyor 1 is indicated by arrow 4.

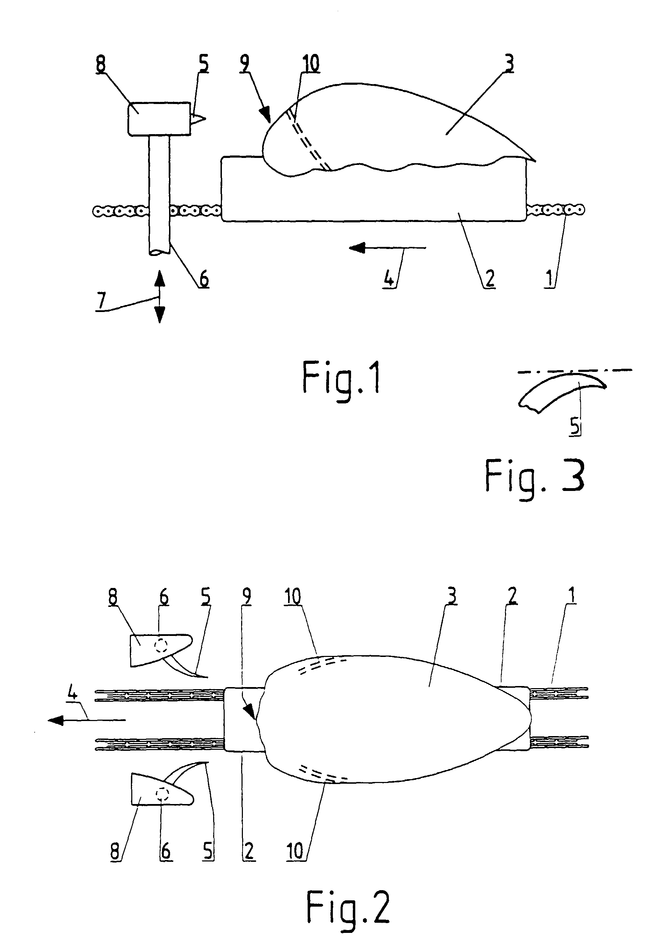

Positioned alongside the conveyor 1 there are two cutting means 5. These cutting means 5 comprise each a hook-shaped knife with a tip directed opposite to the direction of conveyance 4, as shown clearly in fig. 2. In the illustrated embodiment the cutting means 5 are attached to vertically extending rods 6 which by means of driving means not shown in detail are movable upward and downward in correspondence with double arrow 7. Further, in the illustrated embodiment guiding blocks 8 are defined at the top of the rods 6, which blocks are useful while providing a cutting operation by means of the cutting means 5. However, such guiding blocks 8 are not necessary.

When the breastpiece 5 tensioned upon a slide 2 reaches the cutting means 5, the tips of the cutting means 5 engage the skin in the vicinity of the forward end 9 of the breastpiece 3. During the passage of the breastpiece 3 the rods 6 are moved downward in such a way that a cut is made in the breastpiece 3 in accordance with the double dotted line 10. Needless to say, that such a cut 10 is therefore present at both sides of the breastpiece. Due to the lower side of the breastpiece 3 which in rearward direction extends slightly upward the cutting means 5 leave the breastpiece at the end of the cut 10 and will then pass below the remainder of the breastpiece 3 until, previous to the arrival of a next slide with breastpiece, being moved again towards their upward starting position.

Next the breastpiece 3 comprising the cut 10 reaches the deskinning means not shown in detail which engage the skin at the forward end 9 and pull it loose entirely and in one piece from the breastpiece 3. Next the breastpiece 3 is ready to be filleted.

Fig. 3 shows part of a cutting means 5 having such a shape that the tip of the knife is distanced further from a breastpiece to be processed than a knife portion immediately following said tip. The striped and dotted line indicates the track followed by (part of) a breastpiece. As a result at one hand a good cutting operation is obtained, whereas at the other hand it can be avoided that bone fragments enter the flesh.

Apart from the illustrated embodiment also embodiments are conceivable in which the cutting means 5 have a stationary position (such that the cuts are not curved). However, also other movements of the cutting means 5, for example perpendicularly to the plane of the drawing as seen in fig. 1, are conceivable. The driving means necessary for this can easily be realised by an expert. In this context it is noted, that the invention is not limited to the embodiment described before which can be varied widely within the scope of the invention as defined by the claims.

## Claims

1. Apparatus for filleting the breastpiece of poultry, comprising a conveyor for conveying said breastpiece and deskinning means bordering on said conveyor for removing the skin from the breastpiece, wherein said deskinning means comprise means for tearing the skin loose from the breastpiece as well as preceding cutting means positioned alongside the conveyor for making a cut in the skin at the location of the wing joints, **characterised** in that each cutting means comprises a hook-shaped knife with a tip directed opposite to the direction of conveyance of the conveyor.

2. Apparatus according to claim 1, **characterised** in that the tip of the knife is distanced further from a breastpiece to be processed than a knife portion immediately following said tip.

3. Apparatus according to claim 1 or 2, **characterised**, in that the cutting means are stationary.

4. Apparatus according to claim 1 or 2, **characterised** in that the cutting means are movable relative to the conveyor.

## Patentansprüche

1. Vorrichtung zum Filetieren des Bruststückes eines Geflügels mit einer Fördereinrichtung zum Fördern des Bruststückes und mit einer an die Fördereinrichtung grenzenden Enthäutungseinrichtung zum Entfernen der Haut von dem Bruststück, wobei die Enthäutungseinrichtung sowohl Einrichtungen zum Ablösen der Haut von dem Brustteil als auch Vorschneideeinrichtungen, die entlang der Fördereinrichtung angeordnet sind, zum Herstellen eines Schnittes in die Haut an die Stelle der Flügelgelenke aufweisen,
dadurch gekennzeichnet, daß
jede Schneideinrichtung ein hakenförmiges Messer mit einer zur Beförderungsrichtung der Fördereinrichtung entgegengesetzt gerichteten Spitze aufweist.

2. Vorrichtung nach Anspruch 1, dadurch gekennzeichnet, daß die Spitze des Messers weiter von einem bearbeiteten Bruststück entfernt ist als ein der Spitze unmittelbar nachfolgender Messerabschnitt.

3. Vorrichtung nach einem der Ansprüche 1 oder 2, dadurch gekennzeichnet, daß die Schneideeinrichtungen stationär sind.

4. Vorrichtung nach einem der Ansprüche 1 oder 2, dadurch gekennzeichnet, daß die Schneideeinrichtungen relativ zur Fördereinrichtung bewegbar sind.

## Revendications

1. Appareil pour ôter les filets de la poitrine d'une volaille, comprenant un convoyeur pour convoyer ladite poitrine et des moyens de dépeçage bordant ledit convoyeur pour retirer la peau de la poitrine, dans lequel lesdits moyens de dépeçage comprennent des moyens pour libérer par déchirement la peau de la poitrine ainsi que des moyens de découpage précédents positionnés à côté le long du convoyeur pour ménager une découpe dans la peau à l'endroit des articulations des ailes, caractérisé en ce que chaque moyen de découpe comprend un couteau en forme de crochet avec une pointe dirigée à l'opposé du sens de convoyage du convoyeur.

2. Appareil selon la revendication 1, caractérisé en ce que la pointe du couteau est plus éloignée d'une poitrine à traiter qu'une partie du couteau suivant immédiatement ladite pointe.

3. Appareil selon la revendication 1 ou 2, caractérisé en ce que les moyens de découpe sont stationnaires.

4. Appareil selon la revendication 1 ou 2, caractérisé en ce que les moyens de découpe sont déplaçables par rapport au convoyeur.
